## Europäisches Patentamt
## European Patent Office
## Office européen des brevets

(11) Veröffentlichungsnummer: **0 034 769**
A1

(12) **EUROPÄISCHE PATENTANMELDUNG**

(21) Anmeldenummer: **81101001.6**

(22) Anmeldetag: **13.02.81**

(51) Int. Cl.³: **B 29 D 23/04**
**B 29 C 17/00**

(30) Priorität: **23.02.80 DE 3006859**

(43) Veröffentlichungstag der Anmeldung:
**02.09.81 Patentblatt 81/35**

(84) Benannte Vertragsstaaten:
**AT BE CH DE FR IT LI**

(71) Anmelder: **HOECHST AKTIENGESELLSCHAFT**
**Postfach 80 03 20**
**D-6230 Frankfurt/Main 80(DE)**

(72) Erfinder: **Jansen, Bernhard**
**Am Eschenhang 7**
**D-6239 Eppstein/Taunus(DE)**

(54) **Verfahren und Vorrichtung zum Prägen der Innenwände kastenförmiger Hohlprofile.**

(57) Die Innenwände von kastenförmigen Hohlprofilen oder Mehrkammer-Hohlprofilen (1) können mit Querprägungen oder Rasterungen versehen werden, (1A) wenn am Dorn (3) der Extruderdüse mindestens eine Prägewalze (5) befestigt ist, die in Extrusions- vorrichtung mitläuft und das Extrudat gegen mitlaufende Andrückrollen (6) oder gegen die Wand der Kalibrierung (4) drückt.

FIG. 3

EP 0 034 769 A1

Croydon Printing Company Ltd.

HOECHST AKTIENGESELLSCHAFT HOE 80/F 034                    Dr.DA/a

Verfahren und Vorrichtung zum Prägen der Innenwände kastenförmiger Hohlprofile

Lichtwände werden häufig aus kontinuierlich extrudierten
Hohlkammerprofilen aus durchsichtigen oder transparentem
Kunststoff aufgebaut. Um eine bessere Lichtstreuung zu
erreichen, ist es vorteilhaft, die Profile mit einem Raster
zu versehen. Es bereitet nun keine Schwierigkeiten, ein
Hohlprofil innen und/oder außen mit einer in Extrusionsrichtung verlaufenden Prägung zu versehen, da dazu nur
eine entsprechende Gestaltung von Werkzeug und Kalibrierung
erforderlich ist. Es ist auch bekannt, der Außenseite eines
Profils durch Formen und Abkühlen mit Prägewalzen eine
Querprofilierung zu geben /vgl. DE-OS 21 56 139/. Für
Lichtwandprofile wäre es aber günstiger, die Innenwände mit
einer Prägung oder Rasterung auszustatten, da diese Hohlprofile weniger verschmutzen würden, besser zu reinigen
und einfacher zu dichten wären.

Es wurde nun gefunden, daß die Innenwände von kastenförmigen Hohlprofilen oder Mehrkammer-Hohlprofilen mit Querprägungen oder Rasterungen versehen werden können, wenn am
Dorn der Extruderdüse mindestens eine Prägewalze befestigt
ist, die in Extrusionsrichtung mitläuft und das Extrudat
gegen mitlaufende Andrückrollen oder gegen die Wand der
Kalibrierung drückt.

Gegenstand der Erfindung ist somit das in den Ansprüchen
genannte Verfahren und die Vorrichtung zu seiner Ausführung.

Zur Durchführung des erfindungsgemäßen Verfahrens eignet
sich eine aus einem Extruder mit Kopf und Profildüse,
Außenkalibrierung, Kühl- und Abzugsvorrichtung bestehende
Vorrichtung, wie sie im Handel erhältlich ist. Am Dorn
der Profildüse wird mindestens eine in Fließrichtung
rotierende Prägewalze befestigt.

Der für die Prägung erforderliche Gegendruck kann entweder durch eine äußere, gegenüber der Prägewalze liegende Andrückrolle erzeugt werden, oder die Prägewalze reicht bis in die Außenkalibrierung, so daß der noch plastische Strang von der Prägewalze an die Kalibriervorrichtung gedrückt wird. Je nach verwendetem Thermoplast und Viskosität der Schmelze kann es vorteilhaft sein, die Prägung durchzuführen, solange der gesamte extrudierte Hohlstrang noch plastisch ist, oder wenn die Außenhaut durch die Kalibrierung bereits verfestigt ist.

Die Prägewalze muß synchron mit der Extrudier- bzw. Abzugsgeschwindigkeit laufen. Dies kann dadurch erreicht werden, daß die Walze durch das extrudierte Profil selber angetrieben wird, oder durch einen Regelmotor entsprechend der Abzugsgeschwindigkeit. Der Walzenantrieb erfolgt dabei vorzugsweise mit Hilfe einer in das Walzenprofil eingreifenden Spindel, die durch den Düsendorn geführt wird.

Für die Profilextrusion wird vorzugsweise ein Extruder mit Winkelkopf eingesetzt, bei welchem die Düse seitlich angeströmt wird und die Herstellung der Prägewalze in Abzugsrichtung angeordnet ist. Die Prägewalze ist sowohl im Abstand zur Düse als auch in der Höhe verstellbar, um ihre genaue Lage dem eingesetzten Thermoplasten und der gewünschten Wanddicke anpassen zu können.

Soll nur eine Innenseite eines kastenförmigen Hohlkammerprofil geprägt werden, so genügt eine Prägewalze. Sollen mehrere Seiten, z.B. die beiden gegenüberliegenden geprägt werden, so werden entsprechend mehrere Prägewalzen am Dorn der Extruderdüse befestigt. Bei Mehrkammer-Hohlprofilen, die durch Werkzeuge mit mehreren Dornen erzeugt werden, wird natürlich jeder Dorn mit ein oder zwei Prägewalzen versehen.

Die Prägewalze kann ein- oder mehrteilig sein, je nachdem, ob die Prägung bis in die Ecken des Hohlkammerprofils reichen soll oder nicht. Im ersten Fall wird die Walze mehrteilig sein und die Lagerung zur Mittedes Hohlkammerprofils hin angeordnet, im zweiten Fall kann die Walze einteilig sein und an beiden Enden gelagert werden.

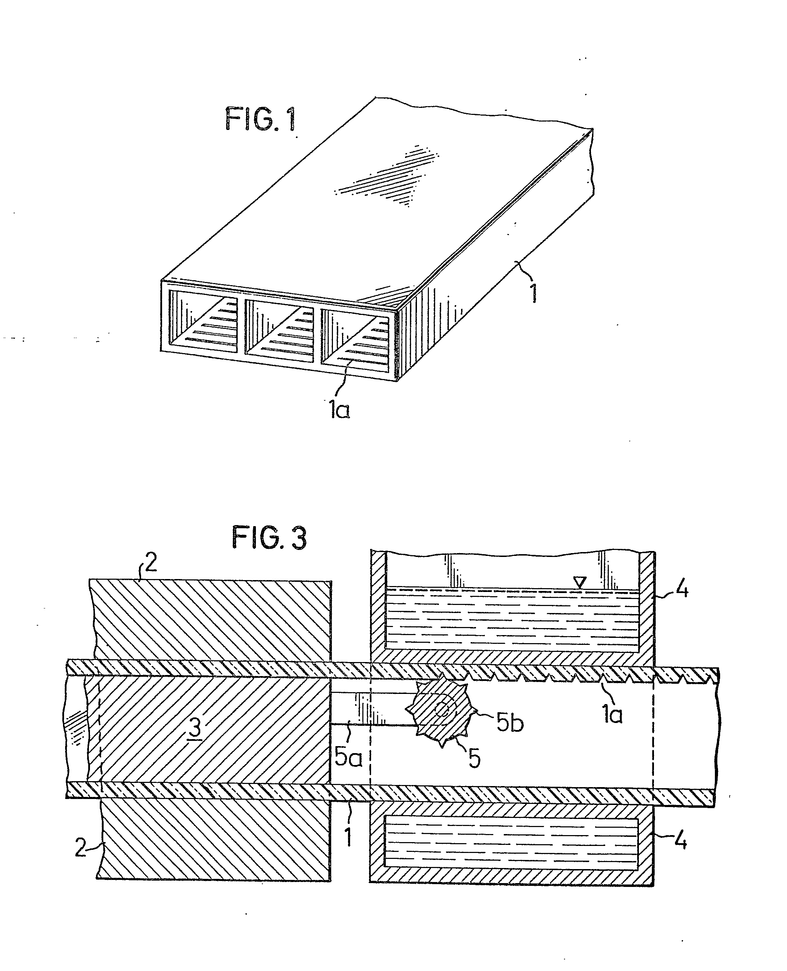

Figur 1 zeigt ein erfindungsgemäß geprägtes Dreikammer-Hohlprofil (1) mit einer ein Querraster (1a) aufweisenden Innenseite.

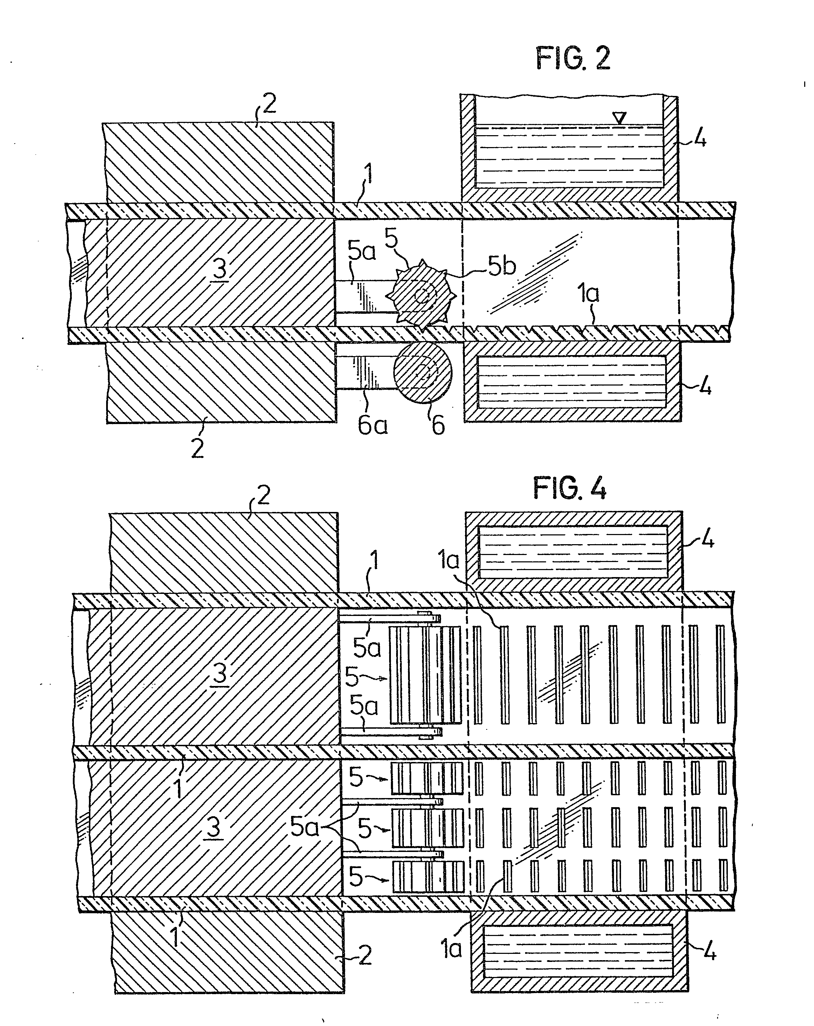

In Figur 2 ist eine erfindungsgemäße Vorrichtung für eine einseitige Innenprägung eines Hohlkammerprofils (1) in Längsschnitt dargestellt. Düsenmundstück (2) und Dorn (3) bilden die Extruderdüse, in welcher das Hohlkammerprofil (1) geformt wird. Dem Extruderkopf nachgeordnet ist eine Kalibrier- und Kühleinrichtung (4). Im Innern des Hohlkammerprofils (1) ist am Dorn (3) eine Prägewalze (5) mit der Halterung (5a) verstellbar angebracht. Ihr gegenüber an der Außenseite des Hohlkammerprofils (1) ist eine Gegendruckwalze (6) angeordnet, welche an dem Düsenmundstück (2) mit der Halterung (6a) befestigt ist. Durch die Prägewalze (5) erhält das Hohlkammerprofil (1) eine mit einem Querraster (1a) versehene Innenseite.

Figur 3 zeigt die gleiche Vorrichtung, wobei jedoch anstelle einer Gegendruckwalze (6) die Kalibriereinrichtung (4) als Gegenlager für die Prägewalze (5) dient.

Für eine beidseitige Innenprägung werden entsprechend zwei Prägewalzen (5) am Dorn (3) befestigt.

In der Figur 4 ist ein Zweikammer-Hohlprofil (1) im Längsschnitt gezeigt, welches durch zwei verschiedene Prägewalzen (5) geprägt wird. Während die eine Walze (5) einteilig ist und somit eine nur in der Mitte mit Prägungen (1a) versehene Innenseite erzeugt, ist die andere Walze (5) mehrteilig und bewirkt eine auch in den Randbereichen mit Prägungen (1a) versehene Innenseite des Hohlkammerprofils (1).

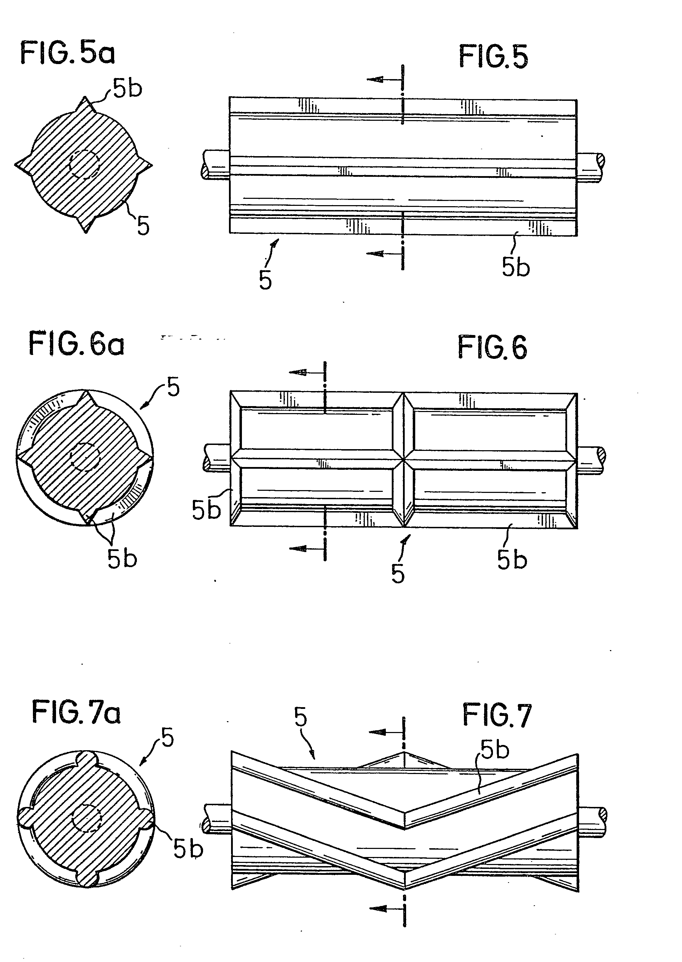

Die Figuren 5-7a zeigen Möglichkeiten der Gestaltung der Oberfläche von einteiligen Prägewalzen (5). Üblicherweise werden die Walzen (5) mit erhabenen Rippen (5b) versehen. Neben den gezeigten Möglichkeiten der Oberflächengestaltung sind natürlich auch andere Muster denkbar, z.B. Prismen, Querwellen, Kassetten,udg..

Zur Durchführung des erfindungsgemäßen Verfahrens wird die Extrusionsanlage in bekannter Weise angefahren, nachdem die Prägewalzen (5) auf die beabsichtigte Prägetiefe eingestellt worden sind. Nach Erreichen konstanter Betriebsbedingungen werden die Gegendruckwalzen (6) bzw. die Kalibriereinrichtung (4) in die vorgesehene Position gebracht, so daß das Hohlprofil (1) gegen die Prägewalzen (5) gedrückt wird.

Patentansprüche:

1. Verfahren zur Herstellung von innen in Querrichtung profilierten oder gerasterten, kastenförmigen Hohlprofilen aus Thermoplasten, dadurch gekennzeichnet, daß das aus der Extruderdüse austretende plastische Hohlprofil (1) durch mindestens eine am Dorn (3) der Extruderdüse befestigte, in Extrusionsrichtung im Profil rotierende Prägewalze (5) vor oder nach Eintritt in die Außenkalibrierung (4) innen geprägt wird.

2. Verfahren nach Anspruch 1, dadurch gekennzeichnet, daß das aus der Extruderdüse austretende Hohlprofil (1) zwischen der im Profil rotierenden Walze (5) und einer äußeren Gegendruckwalze (6) vor Eintritt in die Außenkalibrierung (4) innen geprägt wird.

3. Verfahren nach Anspruch 1, dadurch gekennzeichnet, daß das aus der Extruderdüse austretende Hohlprofil (1) nach Eintritt in die Außenkalibrierung (4) durch die im Profil rotierende Walze (5) innen geprägt wird.

4. Vorrichtung zur Herstellung von innen in Querrichtung profilierten oder gerasterten kammerförmigen Hohlprofilen aus Thermoplasten, bestehend aus Extruder mit Kopf und Profildüse, Außenkalibrierung, Kühl- und Abzugsvorrichtung, dadurch gekennzeichnet, daß am Dorn (3) der Profildüse mindestens eine in Fließrichtung rotierende Prägewalze (4) befestigt ist.

5. Vorrichtung nach Anspruch 4, dadurch gekennzeichnet, daß der im Profil rotierenden Walze (5) eine äußere Gegendruckwalze (6) gegenübersteht.

6. Vorrichtung zur Extrusion nach Anspruch 4, dadurch gekennzeichnet, daß die im Profil rotierende Walze (5) innerhalb der Kalibrierung (4) angeordnet ist.

FIG.1

1

1a

FIG.3

2

4

3

5b

5a

5

1a

1

2

4

FIG. 2

FIG. 4

FIG.5a

FIG.5

5b

5

5

5b

FIG.6a

FIG.6

5

5b

5b

5b

5

5b

FIG.7a

FIG.7

5

5

5b

5b

0034769

Nummer der Anmeldung

EP 81 10 1001

**Europäisches Patentamt**

**EUROPÄISCHER RECHERCHENBERICHT**

| Kategorie | **EINSCHLÄGIGE DOKUMENTE** | | KLASSIFIKATION DER ANMELDUNG (Int. Cl.¹) |
|---|---|---|---|
| | Kennzeichnung des Dokuments mit Angabe, soweit erforderlich, der maßgeblichen Teile | betrifft Anspruch | |
| | US - A - 2 600 254 (J. LYSOBEY)<br><br>  * Abbildungen 10,11,13; Spalte 1, Zeile 21 - Spalte 2, Zeile 8; Spalte 11, Zeile 61 - Spalte 12, Zeile 4 *<br><br>-- | 1,2,4, 5 | B 29 D 23/04<br>B 29 C 17/00 |
| | GB - A - 1 018 937 (DOW CHEMICAL)<br><br>  * Abbildungen 2,4; Seite 2, Zeilen 88-116 *<br><br>-- | 1 | |
| A | DE - A - 2 734 464 (ROHM)<br><br>  * Abbildungen 1,2 *<br><br>-- | | RECHERCHIERTE SACHGEBIETE (Int Cl.³)<br><br>B 29 C 17/00<br>B 29 D 23/00<br>B 29 F 3/00 |
| A | DE - B - 1 132 711 (CHEM. WERKE HÜLS)<br><br>  * Abbildungen 1,2 *<br><br>-- | | |
| A | FR - A - 2 160 476 (CAVIS-CAVETTI)<br><br>  * Abbildungen 1,2 *<br><br>---- | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 18-05-1981 | KUSARDY |

EPA form 1503.1 06.78